# EUROPÄISCHE PATENTSCHRIFT

(11) **EP 1 963 415 B1**
(45) Veröffentlichungstag und Bekanntmachung des Hinweises auf die Patenterteilung: **14.10.2015**
(21) Anmeldenummer: 06830801.4
(22) Anmeldetag: 22.12.2006
(51) Int. Cl.: C08K 5/00, C08F 220/00, C08J 7/00

(54) **PMMA - FOLIE MIT BESONDERS HOHER WITTERUNGSBESTÄNDIGKEIT UND HOHER UV-SCHUTZWIRKUNG**
PMMA FILM FEATURING PARTICULARLY GREAT WEATHER RESISTANCE AND GREAT UV PROTECTION
FILM DE PMMA AYANT UNE RESISTANCE AUX INTEMPERIES PARTICULIEREMENT ELEVEE ET ASSURANT UNE PROTECTION ELEVEE CONTRE LE RAYONNEMENT U.V.

(30) Priorität: 23.12.2005 DE 102005062687
(43) Veröffentlichungstag der Anmeldung: 03.09.2008
(73) Patentinhaber: Evonik Röhm GmbH, 64293 Darmstadt (DE)
(72) Erfinder: NUMRICH, Uwe, 64846 Gross-Zimmern (DE); NEUHÄUSER, Achim, 55128 Mainz (DE); GOLDACKER, Thorsten, 64380 Rossdorf (DE); ARNDT, Thomas, 64750 Lützelbach (DE); LASCHITSCH, Alexander, 60314 Frankfurt (DE); DICKHAUT-BAYER, Günther, 64560 Riedstadt (DE); KROHMER, Christoph, 71159 Mötzingen (DE)
(86) Internationale Anmeldenummer: PCT/EP2006/070146
(87) Internationale Veröffentlichungsnummer: WO 2007/074138

(56) Entgegenhaltungen:
- WO-A-00/37551
- WO-A-97/00284
- WO-A-2006/062315
- WO-A2-2004/104081
- DE-A1- 10 311 063
- US-A1- 2001 050 356
- US-A1- 2005 131 114

## Beschreibung

### Gebiet der Erfindung

Die Erfindung betrifft einen ein oder mehrschichtigen Kunststoffformkörper, insbesondere aus Polymethyl(meth)acrylat (PMMA) oder aus einer Mischung aus PMMA und Polyvinylidenfluorid, mit einer besonders hohen UV-Stabilität und einer hohen Witterungsstabilität. Dieser wird beispielsweise als Oberflächenschutzfolie für Polyvinychlorid-Fensterprofile eingesetzt. Ferner betrifft die Erfindung ein UV-und Witterungsschutzpaket für transparente Kunststoffe, z.B. eine PMMA-Folie und die mit der Oberflächenschutzfolie ausgerüsteten Gegenstände.

### Stand der Technik

Polymethyl(meth)acrylat weist eine sehr hohe Witterungsbeständigkeit auf und eignet sich daher besonders für alle Anwendungen in bewitterten Außenbereichen. Aus diesem Grund haben sich PMMA-Folien für den Einsatz als Oberflächenschutzfolien für farbige Polyvinylchlorid (PVC)-Fensterprofile am Markt etabliert.

Das fertige Profil muß einen Anforderungstest gemäß der RAL-Gütegemeinschaft bestehen, der unter anderem eine Prüfung der Witterungsbeständigkeit vorsieht, Die Standardprodukte, die von der Röhm GmbH für dieses Anwendungsgebiet in den Handel gebracht werden, beispielsweise Plexiglas ^{®} Folie farblos 99845, zeigen in Dauertests (Xenotest nach ISO 4892-2), daß ihre Bewitterungsstabilität zwar den derzeitigen Anforderungen entspricht, aber noch zu verbessern ist.

Darüber hinaus gibt es eine steigende Nachfrage nach Oberflächenschutzfolien, die die bestehenden Anforderungen an die Bewitterungsstabilität der Oberflächenschutzfolien deutlich übertreffen. Die bisher am Markt erhältlichen Folien setzen zur Stabilisierung gegen UV-Strahlen (Wellenlängen zwischen 300 und 400 nm) meist UV-Absorber des Benztriazol-Typs ein. Diese UV-Absorber werden beispielsweise unter der Marke Tinuvin P (2-(2'-Hydroxy-5'-methylphenyl)-benzotriazol)) von Ciba Specialty Chemicals Inc. vertrieben. Von diesen UV-Absorbern ist bekannt, daß sie über einen Zeitraum von 10 Jahren ihre Wirksamkeit signifikant einbüßen. Die damit ausgerüsteten Witterungsschutzfolien werden erst matt, dann bilden sich Mikrorisse und dann Risse. Allerdings haben diese UV-Absorber auch vorteilhafte Eigenschaften: sie sind farbneutral (geringer Gelbwert), schwerflüchtig (wichtig für die Extrusion der Folien) und preiswert.

JP 2005-97351 (Mitsubishi Rayon) beschreibt eine Folie aus PMMA, die eine ausgezeichnete Stabilität gegenüber Parfümen und in der Haarpflege und - kosmetik eingesetzten Verbindungen aufweist. Der Effekt wird durch die Verwendung einer Mischung aus UV-Absorbern mit einem Schmelzpunkt nicht unter 180 ° Celsius mit einem sterisch gehinderten Amin (HALS, hindered amine light stabilizer) erreicht. Im Vordergrund stehen die gute Alterungsbeständigkeit der Folie bei thermischer Belastung und ihre hohe Lösungsmittelbeständigkeit. Die Folie besteht dabei aus mehreren Lagen unterschiedlicher Zusammensetzungen. Der UV-Absorber kann sowohl ein Benztriazol als auch ein Triazin sein. Vorteile hinsichtlich der Witterungsbeständigkeit werden durch die Anmeldung nicht beschrieben.

JP-OS 2004-338222 beschreibt eine Acrylat-Folie mit erhöhter Fluoreszenzdauer. Man verwendet dazu eine Folie, die mit einem spezifischen UV-Absorber ausgerüstet ist und ordnet über der Folie eine weitere Folie an, die mit einem Fluoreszenzfarbstoff ausgerüstet ist. Fluoreszenzfarbstoffe sind bekanntermaßen wenig stabil gegen UV-Strahlung. Als UV-Absorber kommen Benztriazole, Triazole und Benzophenone oder Kombinationen dieser Absorber in Frage. Positive Einflüsse auf die Eigenstabilität des PMMA oder auf nichtfluoreszierende Farben wurden nicht offenbart.

EP 1 022 311 A1 beschreibt eine Acryl-Folie mit unter Erhalt der Lösemittelbeständigkeit erhöhter Bruchdehnung und verbesserter Beständigkeit gegen Trübung unter dem Einfluß von heißem Wasser. Die erhöhte Bruchdehnung soll die Folie dazu befähigen, auch bei sehr geringen Biegeradien und/oder hohen Verformungsgeschwindigkeiten ohne Bruch verformbar zu sein. Dazu wird eine spezielle Rezeptur verwendet, die u.a. eine acrylbasierte thermoplastische Komponente mit einer Glasübergangstemperatur kleiner/gleich 65°C und einem mittlerem Molekulargewicht zwischen 100000 und 300000 beinhaltet. Hinweise auf eine. Verbesserung der Witterungsbeständigkeit können dieser Anmeldung nicht entnommen werden.

Ciba empfiehlt in ihren Firmenschriften die Kombination von UV-Absorbern mit HALS-Verbindungen zur Stabilisierung von PMMA.

### Aufgabe

Es bestand die Aufgabe, eine Folie aus PMMA zu entwickeln, die die bisher am Markt befindlichen Folienqualitäten in der Bewitterungsstabilität übertreffen, insbesondere die Stabilität über einen längeren Zeitraum (>10 Jahre) soll verbessert werden. Unter Stabilität wird gleichzeitig die Eigenstabilität der Folie gegen UV- und Witterungseinflüsse und die Stabilität der UV-Schutzwirkung (abzulesen beispielsweise aus der Stabilität des Farborts einer mit der Schutzfolie abgedeckten Farbschicht) verstanden.
- Ferner soll das neue UV-Paket möglichst farbneutral sein.
- Die einzelnen Komponenten sollen bei der Verarbeitung in der Extrusionsanlage in möglichst geringem Ausmaß ausgasen.
- Der Gesamtpreis des UV-Pakets darf nicht zu hoch werden.
- Die Migration einer oder mehrerer Komponenten des UV-Pakets an die Oberfläche der Folie soll möglich sein.
- Ein möglichst breites Wellenlängenspektrum (300 nm - 400 nm) soll abgedeckt werden.
- Die Folie soll sich bei Feuchtigkeitseinfluß nicht eintrüben.
- Die Folie soll frei von Weißknick sein.
- Es sollen Komponenten zum Einsatz kommen, die einen wirtschaftlichen Betrieb einer Extrusionsanlage ermöglichen.
- Die Folie soll über eine ausgezeichnete Witterungsbeständigkeit verfügen.

### Lösung

Gelöst wird die Aufgabe durch den Kunststoffformkörper gemäß Anspruch 1.

In den zugehörigen Unteransprüchen werden weitere vorteilhafte Ausführungsformen unter Schutz gestellt. Weiter kann der Formkörper aus einer Mischung von PMMA und fluorhaltigen Kunststoffen, wie beispielsweise Polyvinylidenfluorid (PVDF) bestehen.

### Durchführung der Erfindung

### Herstellung der PMMA-Kunststoffe

Polymethylmethacrylat-Kunststoffe werden im allgemeinen durch radikalische Polymerisation von Mischungen erhalten, die Methylmethacrylat enthalten. Im allgemeinen enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat.

Daneben können diese Mischungen zur Herstellung von Polymethylmethacrylaten weitere (Meth)acrylate enthalten, die mit Methylmethacrylat copolymerisierbar sind. Der Ausdruck (Meth)acrylate umfaßt Methacrylate und Acrylate sowie Mischungen aus beiden. Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylat, tert.-Butyl(meth)acrylat, iso-Butyl-(meth)acrylat, Pentyl(meth)acrylat und 2-Ethylhexyl(meth)acrylat; ferner (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; weiter Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat.

### Radikalinitiatoren

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

### Weitere Monomere

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind. Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Acrylnitril; Vinylester, wie beispielsweise Vinylacetat; Styrol, substituierte Styrole mit einem Alkylsubstituenten in der Seitenkette, wie z. B. α-Methylstyrol und α-Ethylstyrol, substituierte Styrole mit einem Alkylsubstituenten am Ring, wie beispielsweise Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether; Maleinsäurederivate, wie beispielsweise Maleinsäureanhydrid, Methylmaleinsäureanhydrid, Maleinimid, Methylmaleinimid; und Diene, wie beispielsweise Divinylbenzol.
Im allgemeinen werden diese Comonomere in einer Menge von 0 Gew.-% bis 60 Gew.-%, vorzugsweise 0 Gew.-% bis 40 Gew.-% und besonders bevorzugt 0 Gew.-% bis 20 Gew.-%, bezogen auf das Gewicht der Monomeren, eingesetzt, wobei die Verbindungen einzeln oder als Mischung verwendet werden können.

### Regler

Die Einstellung der Kettenlängen der Polymerisate kann durch Polymerisation des Monomerengemisches in Gegenwart von Molekulargewichtsreglern erfolgen, wie insbesondere von den dafür bekannten Mercaptanen, wie beispielsweise n-Butylmercaptan, n-Dodecylmercaptan, 2-Mercaptoethanol oder 2-Ethylhexylthioglycolat, Pentaerythrittetrathioglycolat; wobei die Molekulargewichtsregler im allgemeinen in Mengen von 0,051 bis 5 Gew.-% bezogen auf das Monomerengemisch, bevorzugt in Mengen von 0,1 bis 2 Gew.-% und besonders bevorzugt in Mengen von 0,2 bis 1 Gew.-% auf das Monomerengemisch eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIVII, Seite 66, Georg Thieme, Heidelberg, 1961 oder Kirk-Othmer, Encyclopedia of Chemical Technology, Vol. 1, Seiten 296ff, J. Wiley, New York, 1978).

### Schlagzähmodifizierter Poly(meth)acrylat-Kunststoff

Der schlagzähmodifizierte Poly(meth)acrylat-Kunststoff besteht aus 1 bis 50 Gew.% an Schlagzähmodifier bezogen auf die Menge des Matrixpolymers. Bevorzugt weisen die in der Poly(meth)acrylat-Matrix verteilten Elastomerteilchen einen Kem mit einer weichen Elastomerphase und einer daran gebundenen Hartphase auf.

Der schlagzähmodifizierte Poly(meth)acrylat-Kunststoff (sz-PMMA) besteht aus einem Anteil Matrixpolymer und einem in der Matrix verteilten Anteil an Schlagzähmodifizierungsmitteln auf Basis von vernetzten Poly(meth)acrylaten.

Das Matrixpolymer besteht a) aus 50 Gew.-%, bis 99,9 Gew.-%, radikalisch polymerisierten Methylmethacrylat-Einheiten, b) 0,1 Gew.-% bis 50 Gew.-%, C₁ bis C₄ Acrylat und 0 Gew.-% bis 10 Gew.-% aus mit den Monomeren a) und b) copolymerisierbaren Monomeren. Je höher das Molekulargewicht der Matrixpolymere ist, desto besser ist die Witterungsbeständigkeit der UV-Schutzfolie.

Das mittlere Molekulargewicht Mw (Gewichtsmittel) der Matrix liegt im Bereich von 80.000 glmol bis 180.000 glmol, insbesondere bei 100.000 glmol bis 180.000 glmol (Bestimmung von Mw mittels Gelpermeationschromatographie unter Bezug auf Polymethylmethacrylat als Eichstandard) entsprechen. Besonders gute Bewitterungsstabilitäten werden von Folien erreicht, deren Matrixpolymerisat ein mittlere Molekulargewicht Mw (Gewichtsmittel) von 108.000 glmol bis 180.000 glmol aufweist. Die Bestimmung des Molekulargewichts M, kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Bevorzugt ist ein Copolymer aus 85 Gew.-% bis 99,5 Gew.-% Methylmethacrylat und 0,5 Gew.-% bis 15 Gew.-% C₁- bis C₄-Alkyl(meth)acrylaten, oder ein Copolymer aus 90 Gew.-% bis 99,5 Gew.-% Methylmethacrylat und 0,5 Gew.-% bis 10 Gew.-% Methylacrylat Die Vicaterweichungstemperaturen VET (ISO 306-B50) können im Bereich von mindestens 90°C, bevorzugt von 95° C bis 112°C liegen

Im Extruder können das Schlagzähmodifizierungsmittel und Matrixpolymerisat zu schlagzähmodifizierten Polymethacrylat-Formmassen in der Schmelze vermischt werden. Das ausgetragene Material wird in der Regel zunächst zu Granulat geschnitten. Dieses kann mittels Extrusion oder Spritzguß zu Formkörpern, wie Platten, Folien oder Spritzgußteilen weiterverarbeitet werden.

### Das Schlagzähmodifizierungsmittel

Die Polymethacrylat-Matrix enthält ein Schlagzähmodifizierungsmittel, welches z. B. ein zwei- oder dreischalig aufgebautes Schlagzähmodifizierungsmittel sein kann, bevorzugt werden zweischalige Schlagzähmodifizierungsmittel eingesetzt.

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 und EP-A 0 683 028 beschrieben.

In der Polymethacrylat-Matrix sind 1 Gew.-% bis 35 Gew.-%, bevorzugt 2 Gew.-% bis 20 Gew.-%, besonders bevorzugt 3 Gew.-% bis 15 Gew.-%, insbesondere 5 Gew.-% bis 12 Gew.-% eines Schlagzähmodifizierungsmittels, das eine Elastomerphase aus vernetzten Polymerisatteilchen ist, enthalten.

In einer weiteren Ausführungsform können in der Polymethacrylat-Matrix auch 1 Gew.-% bis 50 Gew.-%, bevorzugt 2 Gew.-% bis 40 Gew.-%, besonders bevorzugt 3 Gew.-% bis 35 Gew.-%, insbesondere 5 Gew.-% bis 30 Gew.-% eines Schlagzähmodifizierungsmittels, das eine Elastomerphase aus vernetzten Polymerisatteilchen ist, enthalten sein. Das Schlagzähmodifizierungsmittel wird in an sich bekannter Weise durch Perlpolymerisation oder durch Emulsionspolymerisation erhalten.

Im einfachsten Fall handelt es sich um mittels Perlpolymerisation erhältliche, vernetzte Teilchen mit einer mittleren Teilchengröße im Bereich von 10 nm bis 150 nm, bevorzugt 20 nm bis 100 nm, insbesondere 30 nm bis 90 nm. Diese bestehen in der Regel aus mindestens 40 Gew.-%, bevorzugt 50 Gew.-% bis 70 Gew.-% Methylmethacrylat, 20 Gew.-% bis 40 Gew.-%, bevorzugt 25 Gew.-% bis 35 Gew.-% Butylacrylat sowie 0,1 Gew.-% bis 2 Gew.-%, bevorzugt 0,5 Gew.-% bis 1 Gew.-% eines vernetzenden Monomeren, z. B. einem mehrfunktionellen (Meth)acrylat wie z. B. Allylmethacrylat und gegebenenfalls weiteren Monomeren wie z. B. 0 Gew.-% bis 10 Gew.-%, bevorzugt 0,5 Gew.-% bis 5 Gew.-% an C₁-C₄-Alkylmethacrylaten, wie Ethylacrylat oder Butylmethacrylat, bevorzugt Methylacrylat, oder anderen vinylisch polymerisierbaren Monomeren wie z. B. Styrol.

Bevorzugte Schlagzähmodifizierungsmittel sind Polymerisatteilchen, die einen zwei- oder einen dreischichtigen Kem-Schale-Aufbau aufweisen können und durch Emulsionspolymerisation erhalten werden (s. z. B. EP-A 0 113 924, EP-A 0 522 351, EP-A 0 465 049 und EP-A 0 683 028). Geeignete Teilchengrößen dieser Emulsionspolymerisate müssen jedoch für die Zwecke der Erfindung im Bereich von 10 nm bis 150 nm, bevorzugt 20 nm bis 120 nm, besonders bevorzugt 50 nm bis 100 nm.

Ein dreischichtiger bzw. dreiphasiger Aufbau mit einem Kern und zwei Schalen kann wie folgt beschaffen sein. Eine innerste (harte) Schale kann z. B im wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und gegebenenfalls Styrol aufgebaut sein, während die äußerste (harte) Schale im wesentlichen meist dem Matrixpolymerisat entspricht, wodurch die Verträglichkeit und gute Anbindung an die Matrix bewirkt wird. Der Polybutylacrylat-Anteil am Schlagzähmodifizierungsmittel ist entscheidend für die schlagzähe Wirkung und liegt bevorzugt im Bereich von 20 Gew.-% bis 40 Gew.-%, besonders bevorzugt im Bereich von 25 Gew.-% bis 35 Gew.-%.

### Zweiphasiger Schlagzähmodifier gemäß EP 0 528 196 A1

Bevorzugt, insbesondere zur Folienherstellung, jedoch nicht auf diese beschränkt, wird ein, im Prinzip aus EP 0 528 196 A1 bekanntes System verwendet, das ein zweiphasiges, schlagzähmodifiziertes Polymerisat ist aus:
a1) 10 Gew.-% bis 95 Gew.-% einer zusammenhängenden Hartphase mit einer Glasübergangstemperatur *T*_{mg} über 70 °C, aufgebaut aus
   a11) 80 Gew.-% bis 100 Gew.-% (bezogen auf a1) Methylmethacrylat und
   a12) 0 Gew.-% bis 20 Gew.-% eines oder mehrerer weiterer ethylenisch ungesättigter, radikalisch polymerisierbarer Monomeren, und
a2) 90 Gew.-% bis 5 Gew.-% einer in der Hartphase verteilten Zähphase mit einer Glasübergangstemperatur *T*_{mg} unter -10 °C, aufgebaut aus
   a21) 50 Gew.-% bis 99,5 Gew.-% eines C₁-C₁₀-Alkylacrylats (bezogen auf a2)
   a22) 0;5 Gew.-% bis 5 Gew.-% eines vernetzenden Monomeren mit zwei oder mehr ethylenisch ungesättigten, radikalisch polymerisierbaren Resten, und
   a23) gegebenenfalls weiteren ethylenisch ungesättigten, radikalisch polymerisierbaren Monomeren,
wobei wenigstens 15 Gew.-% der Hartphase a1) mit der Zähphase a2) kovalent verknüpft sind.

Das zweiphasige Schlagzähmodifizierungsmittel kann durch eine zweistufige Emulsionspolymerisation in Wasser erzeugt werden, wie z. B. in DE-A 38 42 796 beschrieben. In der ersten Stufe wird die Zähphase a2) erzeugt, die zu mindestens 50 Gew.-%, vorzugsweise zu mehr als 80 Gew.-%, aus niederen Alkylacrylaten aufgebaut ist, woraus sich eine Glasübergangstemperatur *T*_{mg} dieser Phase von unter -10 °C ergibt. Als vernetzende Monomere a22) werden (Meth)acrylester von Diolen, wie beispielsweise Ethylenglykoldimethacrylat oder 1,4-Butandioldimethacrylat, aromatische Verbindungen mit zwei Vinyl- oder Allylgruppen, wie beispielsweise Divinylbenzol, oder andere Vernetzer mit zwei ethylenisch ungesättigten, radikalisch polymerisierbaren Resten, wie z. B. Allylmethacrylat als Pfropfvernetzer, eingesetzt. Als Vernetzer mit drei oder mehr ungesättigten, radikalisch polymerisierbaren Gruppen, wie Allylgruppen oder (Meth)acrylgruppen, seien beispielhaft Triallylcyanurat, Trimethylolpropantriacrylat und -trimethacrylat sowie Pentaerythrit-tetraacrylat und - tetramethacrylat genannt. Weitere Beispiele sind hierzu in US 4,513,118 angegeben.

Die unter a23) genannten ethylenisch ungesättigten, radikalisch polymerisierbaren Monomeren können beispielsweise Acryl- bzw. Methacrylsäure sowie deren Alkylester mit 1 - 20 Kohlenstoffatomen, sofern noch nicht genannt, sein, wobei der Alkylrest linear, verzweigt oder cyclisch sein kann. Des Weiteren kann a23) weitere radikalisch polymerisierbare aliphatische Comonomere, die mit den Alkylacrylaten a21) copolymerisierbar sind, umfassen. Jedoch sollen nennenswerte Anteile an aromatischen Comonomeren, wie Styrol, alpha-Methylstyrol oder Vinyltoluol ausgeschlossen bleiben, da sie - vor allem bei Bewitterung - zu unerwünschten Eigenschaften der Formmasse führen.

Bei der Erzeugung der Zähphase in der ersten Stufe muß die Einstellung der Teilchengröße und deren Uneinheitlichkeit genau beachtet werden. Dabei hängt die Teilchengröße der Zähphase im wesentlichen von der Konzentration des Emulgators ab. Vorteilhafterweise kann die Teilchengröße durch den Einsatz eines Saatlatex gesteuert werden. Teilchen mit einer mittleren Teilchengröße (Gewichtsmittel) unter 130 nm, vorzugsweise unter 70 nm, und mit einer Uneinheitlichkeit U₈₀ der Teilchengröße unter 0,5, (U₈₀ wird aus einer integralen Betrachtung der Teilchengrößenverteilung, die per Ultrazentrifuge bestimmt wird, ermittelt. Es gilt: U₈₀ = [(r₉₀ - r₁₀) / r_{50]} - 1, wobei r₁₀, r₅₀, r₉₀ = mittlerer integraler Teilchenradius für den gilt 10,50,90 % der Teilchenradien liegen unter und 90,50,10 % der Teilchenradien liegen über diesem Wert) vorzugsweise unter 0,2, werden mit Emulgatorkonzentrationen von 0,15 bis 1,0 Gew.-%, bezogen auf die Wasserphase, erreicht. Dies gilt vor allem für anionische Emulgatoren, wie beispielsweise die besonders bevorzugten alkoxylierten und sulfatierten Paraffine. Als Polymerisationsinitiatoren werden z. B. 0,01 Gew.-% bis 0,5 Gew.-% Alkali- oder Ammoniumperoxodisulfat, bezogen auf die Wasserphase eingesetzt und die Polymerisation wird bei Temperaturen von 20 bis 100 °C ausgelöst. Bevorzugt werden Redox-Systeme, beispielsweise eine Kombination aus 0,01 Gew.-% bis 0,05 Gew.-% organischem Hydroperoxid und 0,05 bis 0,15 Gew.-% Natriumhydroxymethylsulfinat, bei Temperaturen von 20 bis 80 °C verwendet.

Die mit der Zähphase a2) zumindest zu 15 Gew.-% kovalent verbundene Hartphase a1) weist eine Glasübergangstemperatur von wenigstens 70 °C auf und kann ausschließlich aus Methylmethacrylat aufgebaut sein. Als Comonomere a12) können bis zu 20 Gew.-% eines oder mehrerer weiterer ethylenisch ungesättigter, radikalisch polymerisierbarer Monomerer in der Hartphase enthalten sein, wobei Alkyl(meth)acrylate, vorzugsweise Alkylacrylate mit 1 bis 4 Kohlenstoffatomen, in solchen Mengen eingesetzt werden, daß die oben genannte Glasübergangstemperatur nicht unterschritten wird.

Die Polymerisation der Hartphase a1) verläuft in einer zweiten Stufe ebenfalls in Emulsion unter Verwendung der üblichen Hilfsmittel, wie sie beispielsweise auch zur Polymerisation der Zähphase a2) verwandt werden.

### Das Stabilisatorpaket (Lichtschutzmittel)

Lichtschutzmittel sind hinlänglich bekannt und werden beispielsweise in Hans Zweifel, Plastics Additives Handbook, Hanser Verlag, 5. Ausgabe, 2001, S. 141 ff ausführlich beschrieben. Unter Lichtschutzmitteln sollen UV-Absorber, UV-Stabilisatoren und Radikalfänger verstanden werden.

UV-Absorber können beispielsweise aus der Gruppe der substituierten Benzophenone, Salicylsäureester, Zimtsäureester, Oxalanilide, Benzoxazinone, Hydroxyphenylbenztriazole, Triazine oder Benzyliden-Malonat stammen.

Den bekanntesten Vertreter der UV-Stabilisatoren / Radikalfänger stellt die Gruppe der sterisch gehinderten Amine (Hindered Amine Light Stabilizer, HALS) dar.

Das erfindungsgemäße Stabilisatorpaket besteht aus folgenden Komponenten:
- Komponente A: einem UV-Absorber vom Benztriazol-Typ,
- Komponente B: einem UV-Absorber vom Triazin-Typ
- Komponente C: einem UV-Stabilisator (HALS-Verbindung)

Die einzelnen Komponenten können als Einzelsubstanz oder in Mischungen eingesetzt werden.

### Einpolymerisierbare UV-Absorber

Typische Monomere dieser Art enthalten Gruppen mit hoher Absorption im Wellenlängenbereich von 290 bis 370 nm. Bevorzugt sind Monomere, deren UV-Absorption in Form einer 5 mm dicken Schicht einer Lösung in Chloroform (Spektroskopie-Qualität) bei einer Konzentration von 0,002 Gew.-% wenigstens 10 % beträgt. Geeignet sind z.B. Derivate des 2-Hydroxybenzophenons, des Hydroxyacetophenons, des Cyano-β,β-diphenyls, der Hydroxybenzoesäureester, des Oxanilids, der para-Aminobenzoesäureester oder der 6,8-Dialkyl-4-oxo-5-chromanylverbindung. Als ethylenisch ungesättigte, radikalisch polymerisierbare Gruppen enthalten diese Monomeren vorzugsweise Acryl-, Methacryl-, Allyl- oder Vinylgruppen.

Beispiele geeigneter Monomere sind: 2-(Cyano-β,β-diphenylacryloyloxy)ethyl-1-methacrylat, 2-(2'-Hydroxy-3'-methacrylamidomethyl-5'-octylphenyl)-benztriazol, 2-Hydroxy-4-(2-hydroxy-3-methacrylolyloxy)propoxybenzophenon, 2-(alpha-Cyano-β,β-diphenylacryloyloxy)ethyl-2-methacrylamid, 2-Hydroxy-4-methacryloyloxybenzophenon, 2-Hydroxy-4-acryloyloxyethyloxybenzophenon, N-(4-Methacryloylphenol)-N'-(2-ethylphenyl)oxalsäurediamid, 4-Ethyl-alpha-cyano-β-phenylzimtsäure-vinylester, 2-(2-Hydroxy-5-vinylphenyl)-2-benztriazol.

Der Anteil des UV-Absorbierenden Monomeren an dem Polymethylmethacrylat kann vorteilhaft so hoch gewählt werden, dass die Folienschicht wenigstens 98 % der einfallenden UV-Strahlung einer Wellenlänge von 290 bis 370 nm absorbiert. Die dafür erforderliche Konzentration hängt von der Schichtdicke und der Wirksamkeit des Monomeren ab. Sie liegt in der Regel zwischen 0,1 Gew.-%, und 2 Gew.-%, bezogen auf das Gewicht der Monomeren, die zur Herstellung der Polymethyl(meth)acrylate eingesetzt werden.

Einpolymerisierbare UV-Absorber haben den Nachteil, nicht zu migrieren. Im Lauf der Bewitterung verarmt die obere, dem UV-Licht und dem Wetter ausgesetzte Schicht zunehmend an UV-Absorber, durch die Immobilisierung des Moleküls als Bestandteil des Polymers kann aber kein unverbrauchter UV-Absorber nachdiffundieren, die Schicht ist den Angriffen der UV-Strahlung und des Wetters schutzlos ausgeliefert.

Die Verwendung nicht-einpolymerisierter UV-Absorber ermöglicht hingegen das Nachmigrieren des UV-Absorbers an die Oberfläche. Gleichzeitig möchte man aber vermeiden, dass der migrationsfähige UV-Absorber während der Verarbeitung wie z.B. im Extrusionsprozess aus dem Kunststoffformkörper entweicht. Deshalb ist hier der Einsatz von schwerflüchtigen Lichtschutzmitteln bevorzugt. Die Flüchtigkeit kann über den Gewichtsverlust in der TGA gemäß DIN ISO 11358 bestimmt werden. Bevorzugt sind hierbei Lichtschutzmittel, die bei dieser Messung an der reinen Substanz und einer Aufheizrate von 20 °C/min in Luft einen Gewichtsverlust von 2 % bei einer Temperatur von größer als 240 °C, bevorzugt größer als 270 °C und besonders bevorzugt von größer als 300 °C aufweisen.

### Komponente A: UV-Absorber vom Benztriazol-Typ

Als UV-Absorber vom Benztriazol-Typ können beispielsweise 2-(2-Hydroxy-5-methylphenyl)-benztriazol, 2-[2-Hydroxy-3,5-di-(alpha,alpha-dimethyl-benzyl)-phenyl]-benztriazol, 2-(2-Hydroxy-3,5-di-t-butylphenyl)-benztriazol, 2-(2-Hydroxy-3-5-butyl-5-methylphenyl)-5-chlorbenztriazol, 2-(2-Hydroxy-3,5-di-t-butylphenyl)-5-chlorbenztriazol, 2-(2-Hydroxy-3,5-di-t-amylphenyl)-benztriazol, 2-(2-Hydroxy-5-t-butylphenyl)-benztriazol, 2-(2-Hydroxy-3-sek-butyl-5-t-butylphenyl)-benztriazol und 2-(2-Hydroxy-5-t-octylphenyl)-benztriazol, Phenol, 2,2'-methylenbis[6-(2H-benztriazol-2-yl)-4-(1,1,3,3,-tetramethylbutyl)] verwendet werden.

Die UV-Absorber vom Benztriazol-Typ werden in Mengen zwischen 0,1 Gew.-% und 10 Gew.-%.eingesetzt, bevorzugt in Mengen zwischen 0,2 Gew.-% und 6 Gew.-% und ganz besonders bevorzugt in Mengen zwischen 0,5 Gew.-% und 4 Gew.-%, bezogen auf das Gewicht der Monomeren, die zur Herstellung der Polymethyl(meth)acrylate eingesetzt werden. Es können auch Mischungen unterschiedlicher UV-Absorber vom Benztriazol-Typ eingesetzt werden.

### Komponente B: UV-Absorber vom Triazin-Typ

Ferner können in der Mischung auch Triazine, wie beispielsweise das 2-(4,6-Diphenyl-1,3,5-triazin-2-yl)-5-hexyloxy-phenol, als UV-Stabilisatoren eingesetzt werden.

Die Triazine werden in Mengen zwischen 0,0 Gew.-% und 5 Gew.-% eingesetzt, bevorzugt in Mengen zwischen 0,2 Gew.-% und 3 Gew.-% und ganz besonders bevorzugt in Mengen zwischen 0,5 Gew.-% und 2 Gew.-%, bezogen auf das Gewicht der Monomeren, die zur Herstellung der Polymethyl(meth)acrylate eingesetzt werden. Es können auch Mischungen unterschiedlicher Triazine eingesetzt werden.

### Komponente C: UV-Stabilisatoren

Als Beispiel für Radikalfänger/UV-Stabilisatoren seien hier sterisch gehinderte Amine, die unter dem Namen HALS (Hindered Amine Light Stabilizer) bekannt sind genannt. Sie können für die Inhibierung von Alterungsvorgängen in Lacken und Kunststoffen, vor allem in Polyolefinkunststoffen, eingesetzt werden (Kunststoffe, 74 (1984) 10, S. 620 bis 623; Farbe + Lack, 96 Jahrgang, 9/1990, S. 689 bis 693). Für die Stabilisierungswirkung der HALS-Verbindungen ist die darin enthaltene Tetramethylpiperidingruppe verantwortlich. Diese Verbindungsklasse kann am Piperidinstickstoff sowohl unsubstituiert als auch mit Alkyl- oder Acylgruppen substituiert sein. Die sterisch gehinderten Amine absorbieren im UV-Bereich nicht. Sie fangen gebildete Radikale ab, was die UV-Absorber wiederum nicht können. Beispiele für stabilisierend wirkende HALS-Verbindungen, die auch als Gemische eingesetzt werden können sind: Bis-(2,2,6,6-tetramethyl-4-piperidyl)-sebacat, 8-Acetyl-3-dodecyl-7,7,9,9-tetramethyl-1,3-8-triazaspiro(4,5)-decan-2,5-dion, Bis-(2,2,6,6-tetramethyl-4-piperidyl)-succinat, Poly-(N-ß-hydroxyethyl-2,2,6,6-tetramethyl-4-hydroxypiperidin-bernsteinsäureester) oder Bis-(N-methyl-2,2,6,6-tetramethyl-4-piperidyl)-sebacat.

Die HALS-Verbindungen werden in Mengen zwischen 0,0 Gew.-% und 5 Gew.-% eingesetzt, bevorzugt in Mengen zwischen 0,1 Gew.-% und 3 Gew.-% und ganz besonders bevorzugt in Mengen zwischen 0,2 Gew.-% und 2 Gew.-%, bezogen auf das Gewicht der Monomeren, die zur Herstellung der Polymethyl(meth)acrylate eingesetzt werden. Es können auch Mischungen unterschiedlicher HALS-Verbindungen eingesetzt werden.

Als weitere Costabilisatoren können ferner die bereits beschriebenen HALS-Verbindungen, Disulfite, wie beispielsweise Natriumdisulfit verwendet werden, ferner sterisch gehinderte Phenole und Phosphite.

### Weitere Zuschlagsstoffe

Weitere Zuschlagsstoffe, die dem Kunststoffformkörper zugesetzt werden können, können beispielsweise Mattierungsmittel, Pigmente, Farbstoffe, Haftungsmodifikatoren oder auch andere Polymere sein..

### Herstellung der Kunststoffformkörper

Die Herstellung der ein- oder mehrschichtigen Folie erfolgt durch an sich bekannte Methoden, wie beispielsweise der Extrusion durch eine Breitschlitzdüse wie bei der Flachfolienextrusion, der Blasfolienextrusion oder durch Lösungsgießen. Mehrschichtige Kunststoffformkörper können beispielsweise auch durch Coextrusion, Kaschierung, durch Extrusionsbeschichtung oder durch Lamination hergestellt werden.

Der Kunststoffformkörper kann gegebenenfalls auch mehrschichtig ausgeführt werden.

### Beispiele

### Zusammensetzung der Beispiele:

### Beispiel 1:

Eingesetzt wird eine PMMA-Folie mit einer Dicke von 56 µm, bestehend aus
a) 89,8 Masse-% eines Polymeren aus einem **zweiphasigen Schlagzähmodifier gemäß** EP 0 528 196 mit einer Bruttozusammensetzung von

| | | |
|---|---|---|
| 59,9 | Masse-% | MMA |
| 37,1 | Masse-% | Butylacrylat |
| 0,36 | Masse-% | Ethylacrylat |
| 0,66 | Masse-% | Allylmethacrylat |
| 1,95 | Masse-% | 3-(2-Benztriazololyl) 2-hydroxy-5-tert.- octylbenzylmethacrylat, ein einpolymerisierbarer UV-Absorber. |
| 0,53 | Masse-% | Dodecylmercaptan bezogen auf vorstehende Monomere |

b) 10 Masse-% PLEXIGLAS^{®} 7H, erhältlich bei der Röhm GmbH,
c) 0,2 Masse-% Tinuvin 360 (UV-Absorber auf Basis Benztriazol der Fa. Ciba SC) z und diese Mischung wird mittels üblicher Verfahren zu einer Folie extrudiert.

Die Folie wird dann auf eine PVC-Dekorfolie (braunes Holzdekor) laminiert, anschließend auf einen Kunststoffträger aufgebracht und getestet.

Zusammensetzung der weiteren Beispiele:

### Beispiel 2:

Beispiel 1, abzüglich 1,95 Masse-% 3-(2-Benztriazololyl) 2-hydroxy-5-tert.-octylbenzylmethacrylat im Polymer + 2,3 Masse-%, bezogen auf die Folie nach Beispiel 1, Tinuvin^{®} 360. Die Monomermengen von Beispiel 1 sind entsprechend anzupassen.

### Beispiel 3:

Beispiel 1, abzüglich 1,95 Masse-% 3-(2-Benztriazololyl) 2-hydroxy-5-tert.-octylbenzylmethacrylat+ 2,3 Masse-%, bezogen auf die Folie nach Beispiel 1, Tinuvin^{®} 360 + 0,4 Masse-% Chimassorb 119 (HALS der Fa. Ciba SC). Die Monomermengen von Beispiel 1 sind entsprechend anzupassen.

### Beispiel 4:

Beispiel 1, abzüglich 1,95 Masse-% 3-(2-Benztriazololyl) 2-hydroxy-5-tert.-octylbenzylmethacrylat+ 0,75 Masse-% CGX·UVA 006 (UV-Absorber der Fa. Ciba SC auf Basis Triazin), bezogen auf die Folie nach Beispiel 1, + 0,8 Masse-% Tinuvin^{®} 360. Die Monomermengen von Beispiel 1 sind entsprechend anzupassen.

### Beispiel 5:

Beispiel 1, abzüglich 1,95 Masse-% 3-(2-Benztriazololyl) 2-hydroxy-5-tert.-octylbenzylmethacrylat + 0,75 Masse-% CGX UVA 006, bezogen auf die Folie nach Beispiel 1, + 0,4 Masse-% Chimassorb 119 + 0,8 Masse-% Tinuvin^{®} 360. Die Monomermengen von Beispiel 1 sind entsprechend anzupassen.

### Beispiel 6:

Beispiel 1, abzüglich 1,95 Masse-% 3-(2-Benztriazololyl) 2-hydroxy-5-tert.-octylbenzylmethacrylat + 0,6 Masse-% CGX UVA 006, bezogen auf die Folie nach Beispiel 1, + 0,4 Masse-% Chimassorb 119 + 1,1 Masse-% Tinuvin 360. Die Monomermengen von Beispiel 1 sind entsprechend anzupassen.

### Beispiel 7:

Kommerziell erhältliche Folie, Hersteller: Cova

### Beispiel 8:

Folie analog Beispiel 1, wobei die Folie auf eine rote PVC-Dekorfolie laminiert, anschließend auf einen Kunststoffträger aufgebracht und getestet wird.

### Beispiel 9:

Folie analog Beispiel 3, wobei die Folie auf eine rote PVC-Dekorfolie laminiert, anschließend auf einen Kunststoffträger aufgebracht und getestet wird.

### Beispiel 10:

Folie analog Beispiel 5, wobei die Folie auf eine rote PVC-Dekorfolie laminiert, anschließend auf einen Kunststoffträger aufgebracht und getestet wird.

Die hergestellten Folien wurden im Xenotest nach ISO 4892-2 bewittert. Die Bestrahlungsstärke betrug 180 Watt/m², zwischen 300 und 400 nm Wellenlänge.

### Beispiel 11

Folie analog Beispiel 3, der Butylacrylatgehalt in der matrixbildenden Phase beträgt 8 Masse-%

### Beispiel 12

Wie Beispiel 11 mit folgendem Unterschied: Gesamtreglergehalt beträgt 0,39 Masse-% Dodecylmercaptan bezogen auf die eingesetzten Monomere

### Ergebnis:

Nach 4000h Bewitterung im Alpha High Energy Schnellbewitterungsgerät der Fa. Atlas wurden mittels optischer Bewertung der Muster durch eine Expertenrunde folgende Ergebnisse hinsichtlich Schutzwirkung (z.B. Farbänderung) für das darunter liegende Substrat (Holzdekor) ermittelt: Beispiel 12 zeigt signifikante Vorteile gegenüber Beispiel 11. Beide Beispiele zeigen eine leichte Rissbildung in der PMMA-Schicht.

### Beispiel 13

Wie Beispiel 12 mit folgendem Unterschied: Der Butylacrylatanteil in der matrixbildenden Phase beträgt 12 Masse %.

Nach 4000h Bewitterung im Alpha High Energy Schnellbewitterungsgerät der Fa. Atlas wurden mittels optischer Bewertung der Muster durch eine Expertenrunde folgende Ergebnisse hinsichtlich Schutzwirkung (z.B. Farbänderung) für das darunter liegende Substrat (Holzdekor) ermittelt: Beispiel 13 zeigt ein äquivalentes Verhalten zu Beispiel 12. Rissbildung in der PMMA-Schicht tritt bei Beispiel 13 nicht auf.

| **Beispiel** | **Farbänderung (visuelle Beurteilung nach 4.000 h)** | **Mattgrad (visuelle Beurteilung nach 4.000 h)** | **Farbänderung (visuelle Beurteilung nach 5.333 h)** | **Mattgrad (visuelle Beurteilung nach 5.333 h)** |
|---|---|---|---|---|
| **1:** | **-** | **-** | **--** | **--** |
| **2:** | **○** | **○** | **- bis - -** | **-** |
| **3:** | **○** | **++** | **○** | **+** |
| **4:** | **○** | **++** | **○** | **+** |
| **5:** | **+** | **++** | **+** | **++** |
| **6:** | **+** | **++** | **+** | **+ bis ++** |
| **7:** | **-** | **○** | **- -** | **- -** |
| **8:** | **-** | **-** | **- -** | **- -** |
| **9:** | **○** | **++** | **○** | **+** |
| **10:** | **++** | **++** | **++** | **++** |

| | | | | |
|---|---|---|---|---|
| **++** = keine Veränderung sichtbar **+** = nur sehr leichte Veränderung sichtbar **○** = nur leichte Veränderung sichtbar **-** = deutliche Veränderung sichtbar **- -** = sehr deutliche Veränderung | | | | |

## Patentansprüche

1. Kunststoffformkörper, aufgebaut aus
a. einem transparenten Kunststoff und
b. einer Mischung aus UV-Stabilisatoren und UV-Absorbern,
**dadurch gekennzeichnet, dass** der transparente Kunststoff ein Poly(meth)acrylat ist, das folgende Zusammensetzung aufweist:
c. 50 Gew.-% bis 99,9 Gew.-% Methylmethacrylat,
d. 0,1 Gew.-% bis 50 Gew.-% C₁- bis C₄-Acrylat,
e. 0 Gew.-% bis 10 Gew.-% mit den Monomeren a. und b. copolymerisierbare Monomere,
und dass die Matrix ein mittleres Molekulargewicht von 80.000 g/mol bis 180.000 g/mol aufweist.

2. Kunststoffformkörper nach Anspruch 1,
**dadurch gekennzeichnet, dass**
er schlagzäh ausgerüstet ist.

3. Kunststoffformkörper nach Anspruch 1,
die Menge an Schlagzähmodifier zwischen 1 Gew.-% und 50 Gew.-%, bezogen auf die Menge des Matrixpolymers, besteht.

4. Kunststoffformkörper nach Anspruch 1,
**dadurch gekennzeichnet, dass**
die Mischung aus UV-Stabilisatoren und UV-Absorbern aus folgenden Stoffen zusammengesetzt ist:
die UV-Absorber vom Benztriazol-Typ werden in Mengen zwischen 0,1 Gew.-% und 10 Gew.-% eingesetzt,
die UV-Absorber vom Triazin-Typ werden in Mengen zwischen 0,0 Gew.-% und 5 Gew.-% eingesetzt und
die HALS-Verbindungen werden in Mengen zwischen 0,0 Gew.-% und 5 Gew.-% eingesetzt

5. Kunststoffformkörper nach Anspruch 1,
**dadurch gekennzeichnet, dass**
die Mischung aus UV-Stabilisatoren und UV-Absorbern aus folgenden Stoffen zusammengesetzt ist:
die UV-Absorber vom Benztriazol-Typ werden in Mengen zwischen 0,2 Gew.-% und 6 Gew.-% eingesetzt,
die UV-Absorber vom Triazin-Typ werden in Mengen zwischen 0,2 Gew.-% und 3 Gew.-% eingesetzt und
die HALS-Verbindungen werden in Mengen zwischen 0,1 Gew.-% und 3 Gew.-% eingesetzt

6. Verwendung der Kunststoffformkörper nach Anspruch 1 zum Beschichten von Kunststoffformkörpern,
**dadurch gekennzeichnet, dass**
die Mischung aus UV-Stabilisatoren und UV-Absorbern aus folgenden Stoffen zusammengesetzt ist:
die UV-Absorber vom Benztriazol-Typ werden in Mengen zwischen 0,5 Gew.-% und 4 Gew.-% eingesetzt,
die UV-Absorber vom Triazin-Typ werden in Mengen zwischen 0,5 Gew.-% und 3 Gew.-% eingesetzt und
die HALS-Verbindungen werden in Mengen zwischen 0,2 Gew.-% und 2 Gew.-% eingesetzt.

7. Kunststoffformkörper nach Anspruch 2,
**dadurch gekennzeichnet, dass**
die Menge an Schlagzähmodifier zwischen 1 Gew.-% und 50 Gew.-%, bezogen auf die Menge des Matrixpolymers, besteht.

8. Kunststoffformkörper nach Anspruch 2,
**dadurch gekennzeichnet, dass**
die Mischung aus UV-Stabilisatoren und UV-Absorbern aus folgenden Stoffen zusammengesetzt ist:
die UV-Absorber vom Benztriazol-Typ werden in Mengen zwischen 0,1 Gew.-% und 10 Gew.-% eingesetzt,
die UV-Absorber vom Triazin-Typ werden in Mengen zwischen 0,0 Gew.-% und 5 Gew.-% eingesetzt und
die HALS-Verbindungen werden in Mengen zwischen 0,0 Gew.-% und 5 Gew.-% eingesetzt

9. Kunststoffformkörper nach Anspruch 2,
**dadurch gekennzeichnet, daß**
die Mischung aus UV-Stabilisatoren und UV-Absorbern aus folgenden Stoffen zusammengesetzt ist:
die UV-Absorber vom Benztriazol-Typ werden in Mengen zwischen 0,2 Gew.-% und 6 Gew.-% eingesetzt,
die UV-Absorber vom Triazin-Typ werden in Mengen zwischen 0,2 Gew.-% und 3 Gew.-% eingesetzt und
die HALS-Verbindungen werden in Mengen zwischen 0,1 Gew.-% und 3 Gew.-% eingesetzt

10. Kunststoffformkörper nach Anspruch 2,
**dadurch gekennzeichnet, dass**
die Mischung aus UV-Stabilisatoren und UV-Absorbern aus folgenden Stoffen zusammengesetzt ist:
die UV-Absorber vom Benztriazol-Typ werden in Mengen zwischen 0,5 Gew.-% und 4 Gew.-% eingesetzt,
die UV-Absorber vom Triazin-Typ werden in Mengen zwischen 0,5 Gew.-% und 3 Gew.-% eingesetzt und
die HALS-Verbindungen werden in Mengen zwischen 0,2 Gew.-% und 2 Gew.-% eingesetzt.

## Claims

1. Plastics molding, composed of
a. a transparent plastic and
b. a mixture composed of UV stabilizers and UV absorbers,
**characterized in that** the transparent plastic is a poly(meth)acrylate, the constitution of which is as follows:
c. from 50% by weight to 99.9% by weight of methyl methacrylate,
d. from 0.1% by weight to 50% by weight of C₁-C₄ acrylate,
e. from 0% by weight to 10% by weight of monomers copolymerizable with the monomers a. and b.,
and **in that** the matrix has an average molar mass of from 80 000 g/mol to 180 000 g/mol.

2. Plastics molding according to Claim 1,
**characterized in that**
it has been impact-modified.

3. Plastics molding according to Claim 1,
**characterized in that** the amount of impact modifier is from 1% by weight to 50% by weight, based on the amount of the matrix polymer.

4. Plastics molding according to Claim 1,
**characterized in that**
the following substances constitute the mixture composed of UV stabilizers and UV absorbers:
UV absorbers of benzotriazole type used in amounts of from 0.1% by weight to 10% by weight,
UV absorbers of triazine type used in amounts of from 0.0% by weight to 5% by weight and
HALS compounds used in amounts of from 0.0% by weight to 5% by weight.

5. Plastics molding according to Claim 1,
**characterized in that**
the following substances constitute the mixture composed of UV stabilizers and UV absorbers:
UV absorbers of benzotriazole type used in amounts of from 0.2% by weight to 6% by weight,
UV absorbers of triazine type used in amounts of from 0.2% by weight to 3% by weight and
HALS compounds used in amounts of from 0.1% by weight to 3% by weight.

6. Use of the plastics moldings according to Claim 1 for the coating of plastics moldings,
**characterized in that**
the following substances constitute the mixture composed of UV stabilizers and UV absorbers:
UV absorbers of benzotriazole type used in amounts of from 0.5% by weight to 4% by weight,
UV absorbers of triazine type used in amounts of from 0.5% by weight to 3% by weight and
HALS compounds used in amounts of from 0.2% by weight to 2% by weight.

7. Plastics molding according to Claim 2,
**characterized in that** the amount of impact modifier is from 1% by weight to 50% by weight, based on the amount of the matrix polymer.

8. Plastics molding according to Claim 2,
**characterized in that** the following substances constitute the mixture composed of UV stabilizers and UV absorbers:
UV absorbers of benzotriazole type used in amounts of from 0.1% by weight to 10% by weight,
UV absorbers of triazine type used in amounts of from 0.0% by weight to 5% by weight and
HALS compounds used in amounts of from 0.0% by weight to 5% by weight.

9. Plastics molding according to Claim 2,
**characterized in that** the following substances constitute the mixture composed of UV stabilizers and UV absorbers:
UV absorbers of benzotriazole type used in amounts of from 0.2% by weight to 6% by weight,
UV absorbers of triazine type used in amounts of from 0.2% by weight to 3% by weight and
HALS compounds used in amounts of from 0.1% by weight to 3% by weight.

10. Plastics molding according to Claim 2,
**characterized in that** the following substances constitute the mixture composed of UV stabilizers and UV absorbers:
UV absorbers of benzotriazole type used in amounts of from 0.5% by weight to 4% by weight,
UV absorbers of triazine type used in amounts of from 0.5% by weight to 3% by weight and
HALS compounds used in amounts of from 0.2% by weight to 2% by weight.

## Revendications

1. Corps moulé en plastique, formé à partir de
a. un plastique transparent et
b. un mélange de stabilisateurs UV et d'absorbeurs UV,
**caractérisé en ce que** le plastique transparent est un poly(méth)acrylate qui présente la composition suivante :
c. 50 % en poids à 99,9 % en poids de méthacrylate de méthyle,
d. 0,1 % en poids à 50 % en poids d'un acrylate en C₁ à C₄,
e. 0 % en poids à 10 % en poids de monomères copolymérisables avec les monomères a. et b.,
et **en ce que** la matrice présente un poids moléculaire moyen de 80 000 g/mol à 180 000 g/mol.

2. Corps moulé en plastique selon la revendication 1, **caractérisé en ce qu'**il est traité pour être résistant aux impacts.

3. Corps moulé en plastique selon la revendication 1, **caractérisé en ce que** la quantité de modificateur de la résistance aux impacts est comprise entre 1 % en poids et 50 % en poids, par rapport à la quantité du polymère de la matrice.

4. Corps moulé en plastique selon la revendication 1, **caractérisé en ce que** le mélange de stabilisateurs UV et d'absorbeurs UV est composé des substances suivantes :
les absorbeurs UV de type benzotriazole sont utilisés en quantités comprises entre 0,1 % en poids et 10 % en poids,
les absorbeurs UV de type triazine sont utilisés en quantités comprises entre 0,0 % en poids et 5 % en poids, et
les composés HALS sont utilisés en quantités comprises entre 0,0 % en poids et 5 % en poids.

5. Corps moulé en plastique selon la revendication 1, **caractérisé en ce que** le mélange de stabilisateurs UV et d'absorbeurs UV est composé des substances suivantes :
les absorbeurs UV de type benzotriazole sont utilisés en quantités comprises entre 0,2 % en poids et 6 % en poids,
les absorbeurs UV de type triazine sont utilisés en quantités comprises entre 0,2 % en poids et 3 % en poids, et
les composés HALS sont utilisés en quantités comprises entre 0,1 % en poids et 3 % en poids.

6. Utilisation du corps moulé en plastique selon la revendication 1 pour le revêtement de corps moulés en plastique, **caractérisée en ce que** le mélange de stabilisateurs UV et d'absorbeurs UV est composé des substances suivantes :
les absorbeurs UV de type benzotriazole sont utilisés en quantités comprises entre 0,5 % en poids et 4 % en poids,
les absorbeurs UV de type triazine sont utilisés en quantités comprises entre 0,5 % en poids et 3 % en poids, et
les composés HALS sont utilisés en quantités comprises entre 0,2 % en poids et 2 % en poids.

7. Corps moulé en plastique selon la revendication 2, **caractérisé en ce que** la quantité de modificateur de la résistance aux impacts est comprise entre 1 % en poids et 50 % en poids, par rapport à la quantité du polymère de la matrice.

8. Corps moulé en plastique selon la revendication 2, **caractérisé en ce que** le mélange de stabilisateurs UV et d'absorbeurs UV est composé des substances suivantes :
les absorbeurs UV de type benzotriazole sont utilisés en quantités comprises entre 0,1 % en poids et 10 % en poids,
les absorbeurs UV de type triazine sont utilisés en quantités comprises entre 0,0 % en poids et 5 % en poids, et
les composés HALS sont utilisés en quantités comprises entre 0,0 % en poids et 5 % en poids.

9. Corps moulé en plastique selon la revendication 2, **caractérisé en ce que** le mélange de stabilisateurs UV et d'absorbeurs UV est composé des substances suivantes :
les absorbeurs UV de type benzotriazole sont utilisés en quantités comprises entre 0,2 % en poids et 6 % en poids,
les absorbeurs UV de type triazine sont utilisés en quantités comprises entre 0,2 % en poids et 3 % en poids, et
les composés HALS sont utilisés en quantités comprises entre 0,1 % en poids et 3 % en poids.

10. Corps moulé en plastique selon la revendication 2, **caractérisé en ce que** le mélange de stabilisateurs UV et d'absorbeurs UV est composé des substances suivantes :
les absorbeurs UV de type benzotriazole sont utilisés en quantités comprises entre 0,5 % en poids et 4 % en poids,
les absorbeurs UV de type triazine sont utilisés en quantités comprises entre 0,5 % en poids et 3 % en poids, et
les composés HALS sont utilisés en quantités comprises entre 0,2 % en poids et 2 % en poids.
